# EUROPÄISCHE PATENTSCHRIFT

(11) **EP 0 998 100 B1**
(45) Veröffentlichungstag und Bekanntmachung des Hinweises auf die Patenterteilung: **29.03.2006**
(21) Anmeldenummer: 99120647.5
(22) Anmeldetag: 18.10.1999
(51) Int. Cl.: H04L 29/12, H04L 12/28

(54) **Verfahren zum Einrichten eines Internet-Protokoll Netzwerkes**
Method to configure an internet protocol network
Procédé pour configurer un réseau de protocole internet

(30) Priorität: 26.10.1998 DE 19849170
(43) Veröffentlichungstag der Anmeldung: 03.05.2000
(73) Patentinhaber: LANCOM Systems GmbH, 52146 Würselen (DE)
(72) Erfinder: Nurmann, Jens, 52066 Aachen (DE)
(74) Vertreter: Kohlmann, Kai

(56) Entgegenhaltungen:
- EP-A- 0 843 440
- EP-A- 1 001 584
- WO-A-00/27094
- WO-A-98/26548
- DROMS R: "RFC2131: Dynamic Host Configuration Protocol" IETF RFC, März 1997 (1997-03), XP002168114
- ABOBA B: "The Mini-DHCP server" IETF RFC, 4. Oktober 2000 (2000-10-04), XP002168115

## Beschreibung

Die Erfindung betrifft ein Verfahren zum Einrichten eines IP-Netzwerkes (IP: Abkürzung für Internet Protocol (Internet-Protokoll)) mit mehreren IP-Hosts und mit einem IP-Gateway für den Anschluss des IP-Netzwerkes an das Internet (Abkürzung von International Network).

Erläuterung der im Zusammenhang mit der Erfindung verwendeten Begriffe:

| | |
|---|---|
| **IP-Adresse** | Eine IP-Adresse ist eine 32 Bit-Zahl, die regelmäßig mit vier durch Punkte getrennte Zahlen, in der sogenannten "dotted-notation", dargestellt wird. Jede dieser Zahlen beschreibt ein komplettes 8-Bit breites Byte. Die 32 Bit-Zahl beinhaltet sowohl eine Netzadresse, als auch eine Hostadresse, die über die IP-Netzmaske auseinandergehalten werden (Erläuterung vgl. "IP-Netzmaske") |
| **IP-Netzmaske** | Eine IP-Netzmaske ist eine 32 Bit-Zahl, die analog zu einer IP-Adresse dargestellt wird. Sie hält Netz- und Hostadresse in der IP-Adresse durch logische Und-Verknüpfung auseinander, d.h. alle 1 Rit der Netzmaske definieren den Teil der IP-Adresse, welcher zur Netzadresse gehört.(Ist die Netzmaske z.B. 255.0.0.0 ; 255= 128 + 64 + 32 + 16 + 8 + 4 + 2 + 1 ⇔ dezimal = 1 1 1 1 1 1 1 1 binär, sind die 8 vorderen Bits gesetzt). Wird nun die Netzmaske 255.0.0.0 logisch "UND" z.B. mit einer IP-Adresse 10.0.0.4 verknüpft, kommt als Ergebnis 10.0.0.0 raus. Dieses Ergebnis ist dann die Netzadresse, während die Hostadresse die gesamte IP-Adresse 10.0.0.4 ist. Üblich ist auch die Diktion: Host 0.0.4 im Netz 10.0.0.0) |
| **IP-Stack** | Ein IP-Stack ist ein Verfahren, das die Verarbeitung von IP-Datenpaketen entsprechend TCP/IP-basierten Protokollen (TCP/IP: Abkürzung für Transmission Control Protocol/Internet Protocol (Protokoll zur Übertragungssteuerung/Internet-Protokoll)) auf einem Computer ermöglicht. Die offenen Standards -auch RFC genannt (RFC: Abkürzung für requests for comments)- enthalten sämtliche Definitionen der TCP/IP-basierten Protokolle. Die RFCs werden durchnumeriert und sind beispielsweise über das Internet (http://www.fh-koeln.de/doc/rfc/html/rfc.html) kostenlos verfügbar. RFCs werden nie geändert. Es gibt höchstens ergänzende oder ablösende RFCs. |
| **IP-Host** | Ein IP-Host ist ein Computer, auf dem ein IP-Stack installiert ist. |
| **IP-Gateway** | Ein IP-Gateway ist ein Computer, welcher die Vermittlung von IP-Datenpaketen zwischen einem Computer und einem Netzwerk, hier das Internet, durchführen kann. Dieser Computer ist mit einem IP-Stack ausgestattet, damit er die IP-Datenpakete von einem Übertragungsmedium auf ein anders Übertragungsmedium umsetzen kann, beispielsweise von einem LAN (LAN: Abkürzung für Local Area Network) auf ein WAN (WAN: Abkürzung für Wide Area Network). |
| **IP-Netzwerk** | Ein IP-Netzwerk besteht aus mehreren IP-Hosts und einem IP-Gateway, die für eine Datenübertragung miteinander verbunden sind. |

Zur Einrichtung eines IP-Netzwerks sind aus dem Stand der Technik mehrere Möglichkeiten, bekannt:
Der Anwender weist jedem IP-Host in dem IP-Netzwerk manuell eine IP-Adresse und IP-Netzmaske zu. Jeder zusätzliche IP-Host, der in das IP-Netzwerk eingebunden werden soll, erfordert daher zusätzlichen Einrichtungsaufwand. Zu dem Arbeitsaufwand kommt hinzu, dass der Anwender die Adressmechanismen des Internet-Protocol kennen und verstanden haben muss, da eine fehlerhafte Einrichtung einzelner IP-Hosts durchaus zu einer Störung im gesamten IP-Netzwerk führen kann. Will der Anwender das IP-Netzwerk an das Internet anschließen, benötigt er dafür ein IP-Gateway, dessen IP-Adresse ebenfalls in jedem IP-Host des IP-Netzwerks manuell einzutragen ist. Üblicherweise werden weitere IP-Adressen in jeden IP-Host eingetragen, etwa für den "Domain-Name-Service" (kurz DNS) der IP-Adressen in symbolische Namen umsetzt und umgekehrt. Der Domain-Name-Service ist bei Arbeiten im Internet praktisch unverzichtbar.

Eine andere Möglichkeit zur Neueinrichtung eines IP-Netzwerks besteht darin, dass der Anwender nur einem IP-Host eine IP-Adresse und eine IP-Netzmaske zuweist und diesen IP-Host dazu verwendet, weiteren IP-Hosts im IP-Netzwerk IP-Adressen und IP-Netzmasken zuzuweisen. Dies geschieht mittels DHCP (DHCP: Abkürzung für Dynamic-Host-Configuration-Protocol), das auf dem Host installiert sein muss. Das DHCP wird über RFC 2131 und RFC 2132 definiert ("RFC": vgl. die Erläuterungen zu IP-Stack). Der manuell vom Anwender eingerichtete IP-Host arbeitet als DHCP-Server für die weiteren IP-Hosts, die DHCP-Clients. Die Zuweisung der IP-Adressen an die als DHCP-Client arbeitenden IP-Hosts erfolgt von dem DHCP-Server, in dem der Anwender auf dem DHCP-Server hinterlegte IP-Adressen von diesem an die DHCP-Clients = IP-Hosts überträgt. Dies gilt sowohl für die IP-Adressen der IP-Hosts, als auch für weitere IP-Adressen, etwa eines DNS-Servers. Der Anschluss des IP-Gateway an das IP-Netzwerk erfordert trotzdem manuelle Einrichtung, da das IP-Gateway nicht von einem DHCP-Server eingerichtet werden kann. Auch bei dieser Methode zur Einrichtung eines IP-Netzwerks muss der Anwender die Adressmechanismen des Internet-Protocol kennen und verstanden haben. Es entfällt lediglich der Einrichtungsaufwand für die IP-Hosts.

Aus der WO 98 26548 A ist ein Intenet-Gateway mit automatischer Konfiguration des Internetzugangs auf der Anwenderseite bekannt. Der Anwender gibt eine Registrierungs-Identifikation und eine Telephonnummer an dem Internet-Gateway ein. Das Internet-Gateway verbindet sich sodann automatisch mit dem Internet und lädt die Konfigurations-Daten von einem Konfigurations-server herunter, der die auf Anwenderseite erforderlichen spezifischen Konfigurations-Daten enthält und konfiguriert sich anschließend selbst. An das Gateway können mehrere IP-Hosts, beispielsweise Computer oder Laptops, angeschlossen sein. Auf dem Internet-Gateway ist ein DHCP-Server, der geeignete Übertragungsprotokolle zum Internet bereitstellt.

Ferner ist aus der EP 0 843 440 A2 ein Verfahren zur Verwaltung von Geräteadressen innerhalb eines LANs bekannt, das ohne zentralisierten Server arbeitet. Ein Netzwerks-Gerät in dem LAN kann als Listenmanager arbeiten, wobei das Netzwerks-Gerät eine Liste von Geräteadressen für das LAN enthält, oder als Netzwerks-Client, der seine Geräteadresse an einen Listenmanager innerhalb des LANs überträgt. Sofern ein Listenmanager in dem LAN arbeitet, wird das Netzwerks-Gerät als Netzwerks-Client betrieben. Arbeitet in dem LAN kein Listenmanager wird der Listenmanager des Netzwerks-Gerätes aktiviert.

Der Erfindung liegt die Aufgabe zugrunde, ein Verfahren zum Einrichten eines IP-Netzwerkes mit mehreren IP-Hosts und mit einem IP-Gateway sowie einem Zugang zum Internet für die einzelnen IP-Hosts vorzuschlagen, wobei für eine erfolgreiche Einrichtung des Netzwerks sowie des Internetzugangs keine Kenntnisse der Adressmechanismen des Internet-Protocol erforderlich sind und damit Störungen in Folge von Fehlern bei der Einrichtung vermieden werden.

Die Lösung dieser Aufgabe macht sich die Tatsache zu Nutze, dass alle Informationen, die für eine Einrichtung eines IP-Netzwerks mit Internet-Anschluss notwendig sind, im IP-Gateway zusammenlaufen.

Die Erfindung basiert weiter auf dem Gedanken, entgegen dem herkömmlichen Verfahren zunächst keinen DHCP-Server für die Einrichtung zu verwenden, sondern das IP-Gateway im nicht eingerichteten Zustand als DHCP Client herausfinden zu lassen, ob es bereits einen DHCP-Server im IP-Netzwerk gibt. Gibt es keinen DHCP-Server aktiviert sich das IP-Gateway automatisch als DHCP-Server. Die Software (IP-Stack) hierfür ist in der Firmware des Gateway implementiert, so dass der Anwender mit der Installation nicht belastet ist. Der aktivierte DHCP-Server weist standardmäßig den IP-Hosts IP-Adressen und IP-Netzmasken aus einem reservierten Adressbereich zu, so dass die IP-Hosts und das IP-Gateway untereinander IP-Datenpakete austauschen können. In dem reservierten Adressbereich befinden sich üblicherweise ausschließlich IP-Adressen, die nicht für IP-Hosts im Internet vergeben werden. Im einzelnen wird die Aufgabe durch die Merkmale des Anspruchs 1 gelöst.

Entdeckt das IP-Gateway als DHCP Client jedoch, dass es bereits einen DHCP-Server im IP-Netzwerk gibt, aktiviert das IP-Gateway seinen eigenen DHCP-Server nicht und meldet sich bei dem gefundenen DHCP-Server wieder ab, weil offensichtlich eine Einrichtung und Verwaltung des IP-Netzwerkes auf herkömmlichem Wege mit einem IP-Host als DHCP-Server beabsichtigt ist.

Der Zugang zum Internet für die einzelnen IP-Hosts wird vorbereitet, indem nach der Zuweisung der IP-Adressen und IP-Netzmasken auf mindestens einem IP-Host ein Programm zur Konfigurierung des Internetzugangs gestartet wird. Das Programm startet einen Rundruf des IP-Hosts an eine für den Rundruf reservierte Adresse des als DHCP-Server arbeitenden IP-Gateways. Das Konfigurierungsprogramm weist dem IP-Gateway eine IP-Netzmaske und IP-Adresse aus dem hierfür reservierten Adressbereich zu, unter der das Gateway ansprechbar ist, wenn an der reservierten Adresse für den Rundruf ein nicht konfiguriertes IP-Gateway mit aktivem DHCP-Server vorhanden ist.

Die Einrichtung des Internet-Zugangs für das gesamte IP-Netzwerk über nur einen IP-Host mittels des Konfigurationsprogramms geschieht wie folgt:.

Der für die Konfiguration gewählte IP-Host ermittelt anhand des Lokalitätskriteriums, ob eine IP-Adresse eines weiteren IP-Hosts in einem anderen IP-Netzwerk (Ziel-IP-Adresse) vorhanden ist, mit dem einer der IP-Hosts des lokalen IP-Netzwerks in Kontakt treten möchte. Die Ziel-IP-Adresse kann beispielsweise über einen Internet-Provider erreichbar sein oder durch direkte Verbindung zu dem anderen IP-Netzwerk. Alle IP-Pakete die für IP-Adressen bestimmt sind, die nicht in dem lokalen IP-Netzwerk des für die Konfiguration gewählten IP-Hosts liegen, sendet er an sein zuständiges Default IP-Gateway. Das IP-Gateway muss nun anhand der Ziel IP-Adresse entscheiden, wohin es das IP-Paket weitersenden muss. Dazu existiert im IP-Gateway eine IP Routing-Tabelle, welche eine Verknüpfung von IP-Adressen und Zielen definiert. Das Konfigurationstool trägt nun im IP-Gateway eine "Default-Route" ein, die alle IP-Pakete mit Ziel IP-Adressen außerhalb des lokalen IP-Netzwerks an einen "Internet-Provider" übergibt. Dies geschieht z.B. bei einer ISDN-Wählverbindung zum Internet-Provider durch den automatischen Aufbau der Default-Route, sobald ein IP-Paket an den Internet-Provider übergeben werden soll, falls diese Verbindung nicht schon besteht.

Die für die Konfiguration notwendigen Daten, unter anderem eine DNS IP-Adresse, erhält der Anwender von seinem Internet-Provider. Der Zugang zum Internet über den Internet-Provider arbeitet dabei mit einer Adressübersetzungstechnik für IP-Adressen (bekannt als IP-Masquerading), so dass die im IP-Netzwerk intern vergebenen IP-Adressen nicht zum Provider und in das Internet weitergeleitet werden. Sobald der Internet-Zugang über das Gateway konfiguriert ist, sind von beliebigen IP-Hosts im IP-Netzwerk Zugriffe auf das Internet über das IP-Gateway möglich. Das IP-Gateway verwaltet dabei das IP-Masquerading aus dem und in den reservierten Adressbereich sowie für Anfragen zur Umwandlung von symbolischen Namen in IP-Adressen und umgekehrt (DNS).

Der Hauptvorteil der Erfindung besteht darin, dass der Einrichtungsaufwand erheblich reduziert ist, da alle zum Betrieb des IP-Netzwerkes notwendigen IP-Adressen und IP-Netzmasken im IP-Gateway in dem dafür reservierten Adressbereich abgelegt sind. Ein weiterer zentraler Vorteil ist, dass Fehlkonfigurationen vermieden werden, da alle IP-Adressen und IP-Netzmasken für weitere IP-Hosts im IP-Netzwerk vom IP-Gateway zentral vergeben werden.
Das Verfahren ist so gestaltet, dass es sich auch problemlos in bereits bestehenden IP-Netzwerken zu deren Neu-Einrichtung einsetzen lässt.

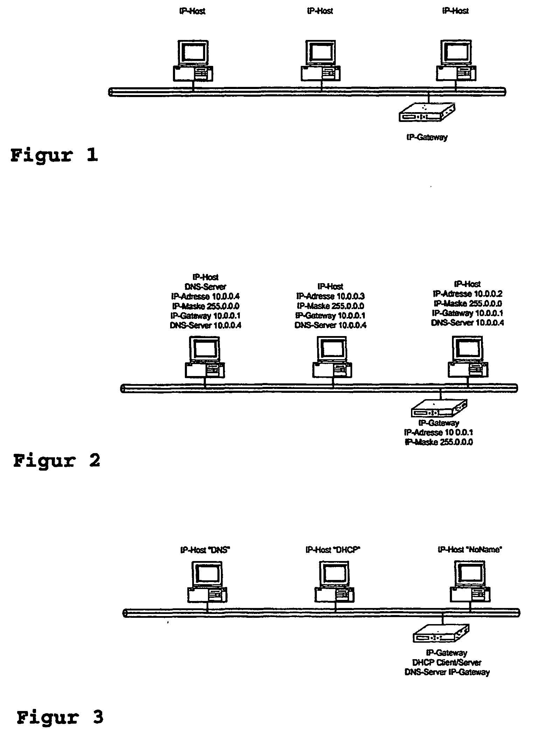

Zur Erläuterung des Standes der Technik und der Erfindung wird auf die Figuren 1 bis 4 Bezug genommen:

Bei der herkömmlichen Einrichtung eines IP-Netzwerks sind mehrere Einzelkonfigurationen an den IP-Hosts und dem IP-Gateway in einer bestimmten Reihenfolge erforderlich, bevor innerhalb des IP-Netzwerks und ggf. auf ein anders Übertragungsmedium, z.B. dem Internet, IP-Pakete übertragen werden können. Figur 1 zeigt die Komponenten eines IP-Netzwerks, die der Anwender herkömmlicher Verfahren konfigurieren muss. Den typischen Umfang eines fertig konfigurierten IP-Netzwerkes mit Anschluss an das Internet zeigt Figur 2. Neben der IP-Adresse und der IP-Netzmaske für den jeweiligen IP-Host, muss für den Internetanschluss die IP-Adresse des IP-Gateway in jedem IP-Host des IP-Netzwerks manuell eingetragen werden. Außerdem ist in jedem IP-Host die Adresse für den "Domain-Name-Service" (kurz DNS) einzutragen. Der DNS setzt IP-Adressen in symbolische Namen um und umgekehrt.

Fig. 3 zeigt ein nicht eingerichtetes IP-Netzwerk, also die Ausgangssituation für das erfindungsgemäße Verfahren. Die symbolischen Namen der IP-Hosts "DNS, DHCP, NoName" sind vom Anwender manuell eingegeben. Üblicherweise sieht ein moderner IP-Stack, der auf jedem der angeschlossenen IP-Hosts installiert ist, bei der Installation eine Anfrage an den Anwender nach einem solchen symbolischen Namen vor. Außerdem können die IP-Stacks als DHCP-Client arbeiten. Das IP-Gateway dient zum Anschluss an das Internet.

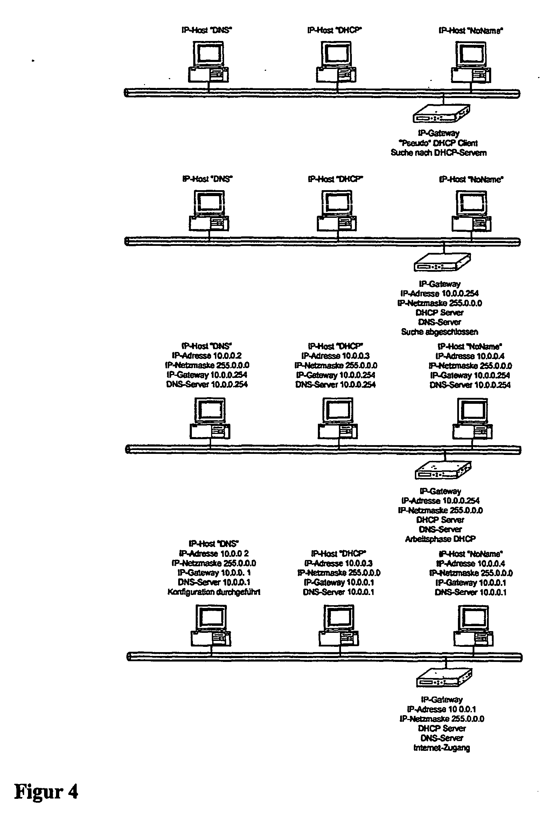

Figur 4 verdeutlicht, dass entgegen dem herkömmlichen Verfahren zunächst kein DHCP-Server für die Einrichtung verwendet wird, sondern das IP-Gateway im nicht eingerichteten Zustand als DHCP Client herausfindet, ob es bereits einen DHCP-Server im IP-Netzwerk gibt (erste Zeile von Figur 4). Gibt es keinen DHCP-Server aktiviert sich das IP-Gateway automatisch als DHCP-Server unter der IP-Adresse 10.0.0.254 mit der Netzmaske 255.0.0.0 und sorgt dafür, dass zukünftig alle DNS-Anfragen an einen DNS-Server weitergeleitet werden. Zum lokalen IP-Netzwerk mit seinen IP-Hosts hin tritt das IP-Gateway als DNS-Server auf; zum Internet hin agiert das IP-Gateway als DNS-Client, der die DNS-Anfragen der IP-Hosts des lokalen IP-Netzwerks weiterleitet. In der Fachterminologie heißt es, dass das IP-Gateway einen DNS-Forwarder einrichtet (zweite Zeile von Figur 4).

Der aktivierte DHCP-Server weist standardmäßig den IP-Hosts "DNS, DHCP, NoName" IP-Adressen 10.0.0.2, 10.0.0.3, 10.0.0.4 und IP-Netzmasken 255.0.0.0. aus einem reservierten Adressbereich zu, so dass die IP-Hosts und das IP-Gateway untereinander IP-Datenpakete austauschen können.

Außerdem wird der Zugang zum Internet für die IP-Hosts "DNS, DHCP, NoName" vorbereitet, indem nach der Zuweisung der IP-Adressen und IP-Netzmasken beispielsweise auf dem IP-Host "DNS" ein Programm zur Konfigurierung des Internetzugangs gestartet wird. Das Programm startet einen Rundruf des IP-Hosts "DNS" an eine für den Rundruf reservierte Adresse des als DHCP-Server arbeitenden IP-Gateways. Das Konfigurierungsprogramm weist dem IP-Gateway die IP-Netzmaske 255.0.0.0. und IP-Adresse 10.0.0.1 aus dem hierfür reservierten Adressbereich zu, unter der das Gateway von den IP-Hosts für den Internetzugang ansprechbar ist. Voraussetzung hierfür ist, dass das IP-Gateway noch nicht konfiguriert ist und ein aktiver DHCP-Server vorhanden ist (dritte Zeile von Figur 4). Nach Abschluss der vollständigen Konfiguration stellt sich das IP-Netzwerk dar, wie in Figur 4, vierte Zeile gezeigt.

## Patentansprüche

1. Verfahren zum Einrichten eines IP-Netzwerkes mit mehreren IP-Hosts und mit einem IP-Gateway für den Anschluss des IP-Netzwerkes an das Internet, wobei auf jedem IP-Host ein IP-Stack installiert ist, der als DHCP-Client arbeiten kann, **dadurch gekennzeichnet, dass**
- auf dem IP-Gateway ein IP-Stack installiert ist, der sowohl als DHCP-Client als auch als DHCP-Server arbeiten kann,
- das IP-Gateway nach dem Einschalten zunächst als DHCP-Client arbeitet und überprüft, ob ein DHCP-Server im IP-Netzwerk vorhanden ist,
- falls kein aktiver DHCP-Server im IP-Netzwerk vorhanden ist, sich der DHCP-Server auf dem IP-Gateway aktiviert und jedem eingeschalteten IP-Host aus einem reservierten Adressbereich IP-Adressen und IP-Netzmasken zuweist,
nach der Zuweisung der IP-Adressen und IP-Netzmasken, auf mindestens einem IP-Host ein Programm zur Konfigurierung des Internetzugangs gestartet wird, das einen Rundruf des IP-Hosts an eine für den Rundruf reservierte Adresse des IP-Gateways startet und
das Konfigurierungsprogramm dem IP-Gateway eine IP-Adresse und IP-Netzmaske aus dem reservierten Adressbereich zuweist, wobei das Gateway unter der IP-Adresse und der IP-Netzmaske von den IP-Hosts ansprechbar ist.

2. Verfahren nach Anspruch 1, **dadurch gekennzeichnet, dass** die jedem IP-Host zugewiesene IP-Adresse mittels Adressübersetzungstechniken an das Internet weitergeleitet werden.

## Claims

1. A method for setting up an IP network comprising several IP hosts and comprising an IP gateway for connection of the IP network to the Internet, wherein an IP stack is installed on each IP host which can operate as DHCP client, **characterised in that**
- an IP stack is installed in the IP gateway which can operate both as DHCP client and as DHCP server,
- after switching on, the IP gateway initially operates as DHCP client and checks whether a DHCP server is present in the IP network,
- if no active DHCP server is present in the IP network, the DHCP server is activated on the IP gateway and each switched-on IP host is allocated IP addresses and IP net masks from a reserved address range,
- after allocating the IP addresses and IP net masks on at least one IP host, a program for configuring the Internet access is started which starts broadcasting the IP host to an address of the IP gateway reserved for broadcast, and
- the configuration program allocates to the IP gateway an IP address and IP net mask from the reserved address range, wherein the gateway can be addressed by the IP host under the IP address and the IP net mask.

2. The method according to claim 1, **characterised in that** the address allocated to each IP host is passed onto the Internet by means of address translation techniques.

## Revendications

1. Procédé pour installer un réseau IP avec plusieurs hôtes IP et avec une passerelle IP pour la connexion du réseau IP à l'Internet, une pile IP étant installée sur chaque hôte IP, qui peut fonctionner en tant que client DHCP, **caractérisé en ce que**,
- une pile IP est installée sur la passerelle IP, qui peut fonctionner aussi bien comme client DHCP que comme serveur DHCP,
- la passerelle IP, après enclenchement, fonctionne d'abord en tant que client DHCP et contrôle si un serveur DHCP est disponible dans le réseau IP,
- dans le cas où aucun serveur DHCP actif n'est disponible dans le réseau IP, le serveur DHCP s'active sur la passerelle IP et attribue des adresses IP et des masques de réseau IP issus d'une plage d'adresses réservée, à chaque hôte IP enclenché,
après attribution des adresses IP et des masques de réseau IP, un programme pour la configuration de l'accès à Internet démarre au moins sur un hôte IP, qui démarre une série d'appels de l'hôte IP sur une adresse de la passerelle IP réservée à la série d'appels et
le programme de configuration attribue à la passerelle IP, une adresse IP à un masque de réseau IP issu de la plage d'adresses réservée, la passerelle pouvant être adressée par les hôtes IP sous l'adresse IP et le masque de réseau IP.

2. Procédé selon la revendication 1, **caractérisé en ce que**, l'adresse IP attribuée à chaque hôte IP est acheminée sur Internet au moyen de techniques de traduction d'adresses.
